# EUROPEAN PATENT SPECIFICATION

(11) **EP 0 772 033 B1**
(45) Date of publication and mention of the grant of the patent: **22.11.2000**
(21) Application number: 96307903.3
(22) Date of filing: 31.10.1996
(51) Int. Cl.: G01L 5/00, G01M 19/00, B21J 15/28

(54) **Method of monitoring and controlling shear strength in riveted joints**
Verfahren zur Überwachung und Prüfung des Scherbelastbarkeit von Nietverbindungen
Procédé de surveillance et de contrôle de la résistance au cisaillement des joints rivés

(30) Priority: 06.11.1995 US 554023
(43) Date of publication of application: 07.05.1997
(73) Proprietor: FORD MOTOR COMPANY LIMITED, Brentwood, Essex CM13 3BW (GB); FORD FRANCE S.A., 92506 Rueil-Malmaison Cédex (FR); FORD-WERKE AKTIENGESELLSCHAFT, 50735 Köln (DE)
(72) Inventor: Saathoff, Donald G., Canton, Michigan 48188 (US)
(74) Representative: Messulam, Alec Moses

(56) References cited:
- DE-A- 4 401 134
- US-A- 5 035 041
- US-A- 5 277 049

## Description

The invention relates generally to riveted joints, and more particularly to such joints formed by operation of pierce and flare rivets.

The challenge to the modern automotive industry to improve fuel economy in the vehicles produced has brought increased attention to the use of aluminium in body construction. To take advantage of the weight advantages of aluminium, it is necessary to employ manufacturing processes which account for the inherent difficulties in joining aluminium components which tend to add cost to the overall manufacturing cost of a vehicle.

One cost efficient technology identified for the joining of body panels is the utilisation of pierce and flare rivets to join adjacent panels in a lap joint formed by placing the panels in overlying relationship. Robotic installation of such fasteners effects cost reductions in manufacturing approaching the conventional joining methods of spot welding traditionally used in the automotive industry in the construction of steel bodies. To take advantage of the economies afforded by such a process, however, it is necessary to assure that the lap joints created possess the requisite level of shear strength for the particular vehicle design. Clearly, it is not acceptable to apply separating loads to assemble automotive vehicle bodies to assure that the joint strength is as specified. Heretofore, no non-destructive method has been known in the art.

According to the present invention, there is provided a method of monitoring and controlling the shear strength of a joint formed with two panels secured together in facing relationship by a pierce and flare rivet driven into piercing relationship with the panels from the outer surface of one of the panels. The rivet preferably has a disk-like head on the end thereof adjacent the panel outer surface. The preferred method comprises preparing a plurality of identical test joints of two test panels representative of said panels in said lap joint; piercing each of said test joints with an identical piercing flare rivet, each rivet being driven to a different control depth with respect to said corresponding test panel outer surface; measuring the shear load required to separate each said test joint; observing and recording correlation data representing the relationship between said control depths and said shear loads; choosing a desired range of shear loads; forming the lap joint; measuring the depth between said rivet head and said panel outer surface; and determining the indicated shear load of said lap joint from said correlation data.

The invention will now be described, by way of example, with reference to the accompanying drawings, in which:
Figure 1 is a partial perspective view illustrating an installation apparatus for forming a lap joint between a pair of automotive body panels;
Figure 2 is a progressive cross-sectional view illustrating the installation of a pierce and flare rivet to form a joint between two panels;
Figure 3 is an enlarged view of a measurement apparatus for measuring a strength indicative dimension in a lap joint; and
Figure 4 is a graphical representative of correlation data between a control parameter and shear load in a lap joint.

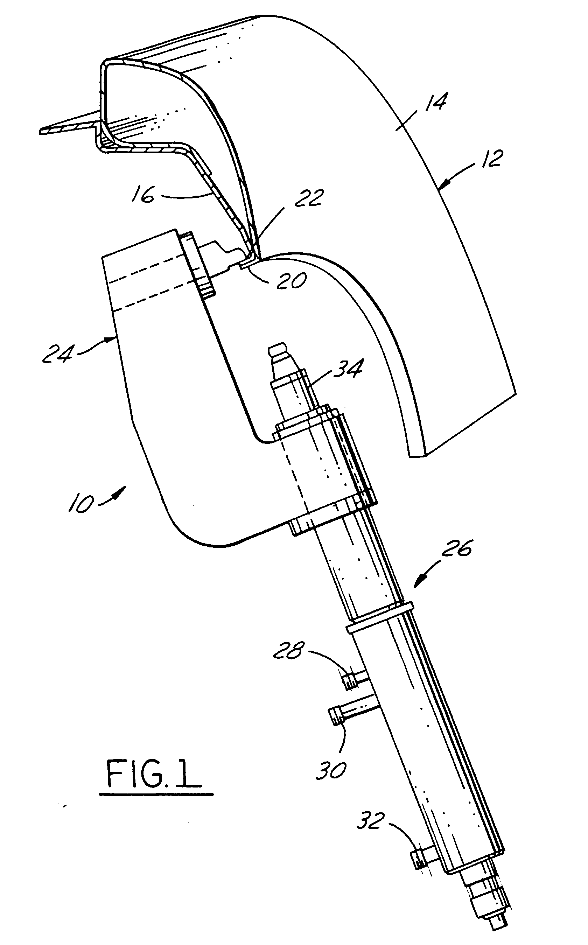

Turning now to the drawings, and in particular to Figure 1 thereof, a riveting apparatus 10 is illustrated adjacent an automotive body assembly 12 for joining portions of the automotive body assembly. In the portion of the automotive body assembly 12 shown in Figure 1, an outer panel 14 and inner panel 16 are illustrated as being configured to form a lap joint, indicated generally at 18, in which an outer flange 20 and an inner flange 22 are arranged in overlying abutting relationship.

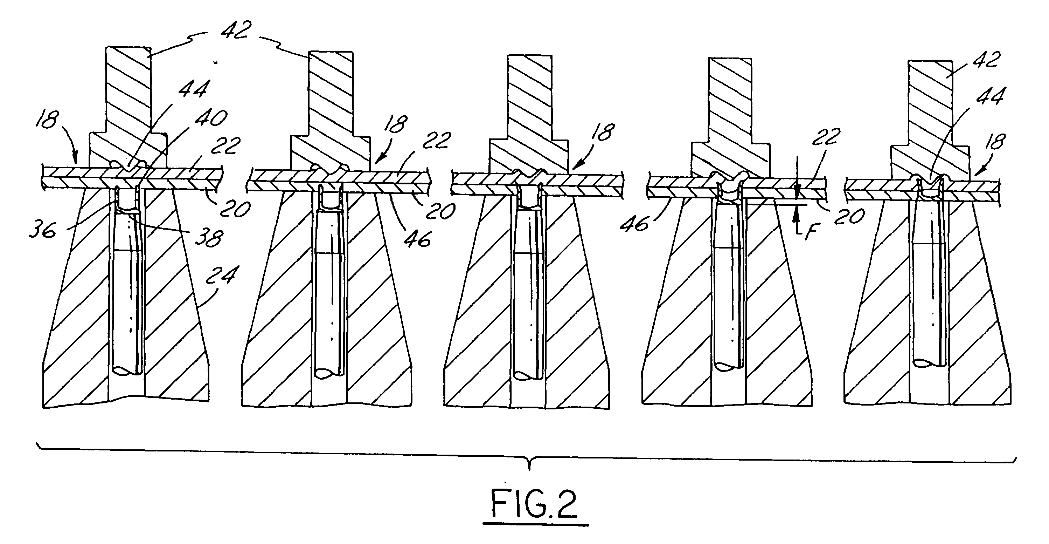

The riveting apparatus 10 is illustrated as including a positioning fixture 24 and a hydraulic ram 26 in fluid communication through connections, as indicated at 28, 30, 32, to a hydraulic power system (not shown) to drive a piston portion, indicated at 34, toward the lap joint 18. The piston portion 34 carries a pierce and flare rivet 36, as may best be seen in Figure 2, and the rivet fixture 24 includes a forming guide, to be later described, carried behind the inner flange 22. The piston portion 34 drives the rivet 36 into pierce and flare engagement with the lap joint 18, in a manner best appreciated by reference to Figure 2.

Turning now to Figure 2, the lap joint 18 is formed by driving rivet 36 into piercing relationship through the flange 20 and into the flange 22. The rivet 36 is generally of cup-shape configuration having a closed head portion 38 and an open end 40. The open end may be configured in known manner to facilitate piercing. Figure 2 illustrates the progress of the rivet 36 into the flanges 20, 22. The rivet 36 defines a central longitudinal axis, and a flare forming die 42 carried in the fixture 24 is presented in axial registration with that longitudinal axis, so that as the rivet 36 pierces the flange 20 and into the flange 22, metal flow about the central portion 44 of the die 42 effects an outward flaring of the open end 40 of the rivet 36.

Viewing the progressive piercing insertion of the rivet 36 into forming lap joint 18 shows various axial positions of the rivet 36 with respect to the outer surface 46 of the flange 20. That axial difference, labelled F in Figure 2, has been found to provide an indication of lap shear strength in a joint like in the lap joint 18. A large volume of testing has indicated that a good correlation on the order of 0.97 exists between the dimension F as a characteristic and the lap shear strength of a riveted joint.

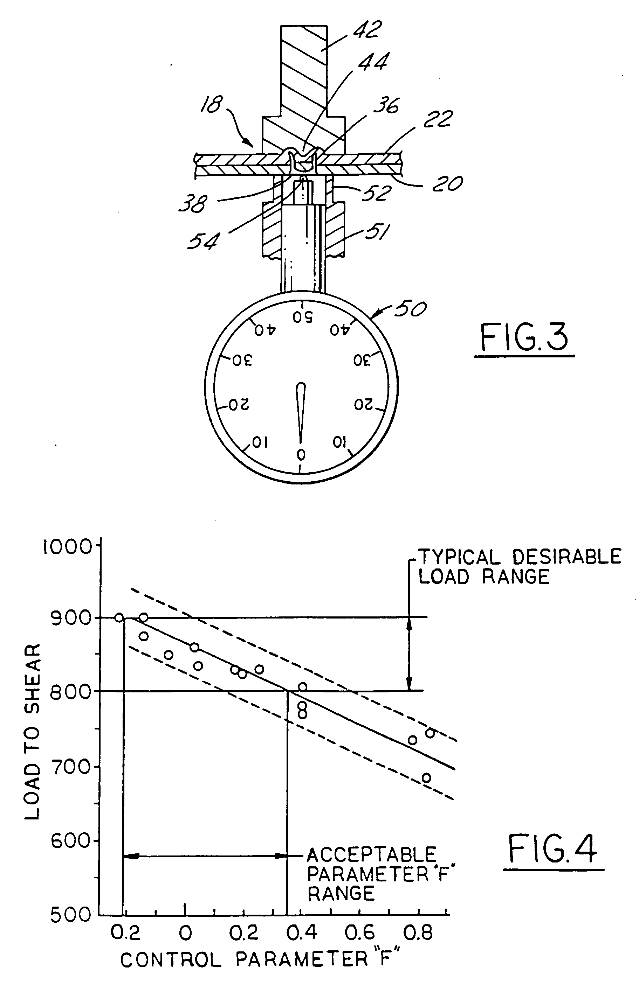

That characteristic or dimension F can be readily measured through utilisation of the modified dial indicator 48, as indicated in Figure 3. The dial indicator 48 includes a base 50 having a die surface 52 that may be engaged against an outer surface, such as the surface 46, then the tip 54 of the dial indicator 50 is placed against the head 38 of the installed rivet 36 to determine the measurement F.

In order to prepare for a large scale production of automotive vehicle bodies employing a variety of lap joints joined by pierce and flare rivets, it has been determined that for any given choice of materials for each of the two panels to be joined, and for any thickness of such panels, testing can be performed to determine the load required to effect shearing separation between a joint formed between such two panels by a pierce and flare rivet of a given diameter whose head, in an assembled position, is displaced from the outer surface of the panel, that is, the panel side from which the rivet is driven, a particular distance. Figure 4 illustrates data collected for a particular joint formed between two aluminium panels. Such a chart presents correlation data, and the joint designer may choose a desirable load range and determine from such correlation data the F dimension or rivet head height to be maintained and monitored in effecting formation of such a joint.

For after-assembly inspection, an apparatus like the dial indicator, shown diagramatically in Figure 3, may be used to determine the acceptability of the joint. If a depth is found to be unacceptable, of course, the operation of the ram 24 must be modified to effect piercing to the appropriate depth.

During volume manufacturing of such a joint, as that depicted in Figure 1 as joint 18, however, the correlation data may be utilised to vary the pressure of the ram and to provide mechanical axial stops for the ram 24 to control positioning of the head 38 of the rivet 36 with respect to the outer surface 46 of the flange 20.

## Claims

1. A method of monitoring and controlling the shear strength of a lap joint (18) formed of two panels (14,16) secured together in overlying facing relationship by a pierce and flare rivet (36) driven into piercing relationship with the panels (14,16) from the outer surface of one of the panels and having a disk-like head (38) on the end thereof adjacent said panel outer surface; the method comprising the steps of:
preparing a plurality of identical test joints of two test panels representative of said panels in said lap joint;
piercing each of said test joints with an identical piercing flare rivet (36), each rivet being driven to a different control depth with respect to said corresponding test panel outer surface;
measuring the shear load required to separate each said test joint;
observing and recording correlation data representing the relationship between said control depths and said shear loads;
choosing a desired range of shear loads;
forming the lap joint (18);
measuring the depth between said rivet head (38) and said panel outer surface; and
determining the indicated shear load of said lap joint (18) from said correlation data.

2. A method as claimed in claim 1, wherein said indicated shear load is outside of said desired shear load range and further comprising the step of modifying said forming step to change said depth between said rivet head and said panel outer surface.

3. A method as claimed in claim 1 or 2, wherein said preparing step is conducted for a plurality of sets of identical test joints wherein each set consists of panels of certain thicknesses and materials and rivets of certain diameter.

4. A method of forming a lap joint between two panels with a pierce and flare rivet of cup-like configuration having a closed head end and an opened end; the method comprising:
preparing a plurality of identical test joints of two test panels representative of said panels in said lap joint;
piercing each of said test joints with identical piercing flare rivets, each rivet being driven to a different control depth with respect to said corresponding test panel outer surface;
measuring the shear load required to separate each test joint;
observing and recording correlation data represent the relationship between said control depths and said shear loads;
choosing a desired range of shear loads;
forming the lap joint;
placing said two panels in overlying facing relationship;
positioning a flare forming die below the lower of said panels;
positioning said rivet in registration with said die on the upper of said panels with said rivet head end facing upwardly; and
driving said rivet into said panels to a depth wherein the depth of said rivet head with respect to the outer surface of the upper of said panels indicates from said correlation data a lap shear strength within the ranges of said desired lap shear strength.

5. A method as claimed in claim 4, wherein said preparing step is conducted for a plurality of sets of identical test joints wherein each set consists of panels of certain thicknesses and materials and rivets of certain diameter.

6. A method as claimed in Claim 4 or 5, wherein the material of one of said panels is aluminium.

7. A method as claimed in Claim 6, wherein said one panel is the upper of said panels.

8. A method as claimed in Claim 6, wherein said one panel is the lower of said panels.

## Patentansprüche

1. Ein Verfahren zur Überwachung und Steuerung der Scherfestigkeit einer Verbindung (18), die aus zwei sich gegenüberliegenden Tafeln (14,16) gebildet wird, die durch einen - von der äußeren Oberfläche einer der Tafeln her durchstechend in die Tafeln (14,16) getriebenen - Durchschlag-Bördelniet (36) aneinander befestigt sind; und der an einem an diese äußere Oberfläche dieser Tafel angrenzenden Ende bevorzugt einen scheibenförmigen Kopf besitzt; wobei das Verfahren die Schritte umfaßt:
Herstellung einer Mehrzahl von identischen Prüfverbindungen von zwei Prüftafeln, die für diese Tafeln in diesem Überlappungsstoß repräsentativ sind;
Durchschlagen jeder dieser Prüfverbindungen mit einem identischen Durchschlag-Bördelniet (36), wobei jeder Niet bezüglich dieser äußeren Oberfläche der entsprechenden Prüftafel in eine unterschiedliche Steuertiefe getrieben wird;
Messen der zum Trennen jeder dieser Prüfverbindungen benötigten Scherlast;
Beobachten und Aufzeichnen von Korrelationsdaten, welche die Beziehung zwischen diesen Steuertiefen und diesen Scherlasten repräsentieren;
Wählen eines gewünschten Bereiches von Scherlasten;
Bilden des Überlappungstoßes (18);
Messen der Tiefe zwischen diesem Nietkopf (38) und dieser äußeren Tafeloberfläche; und
Bestimmen der angezeigten Scherlast dieses Überlappungsstoßes (18) aus diesen Korrelationsdaten.

2. Ein Verfahren nach Anspruch 1, in dem diese angezeigte Scherlast außerhalb dieses gewünschten Scherlast-Bereiches liegt und weiterhin den Schritt der Modifizierung dieses Bildungsschrittes umfaßt, um diese Tiefe zwischen diesem Nietkopf und dieser äußeren Tafeloberfläche zu ändern.

3. Ein Verfahren nach Anspruch 1 oder 2, in dem dieser Herstellungsschritt für eine Mehrzahl von Sätzen identischer Prüfverbindungen ausgeführt wird; und in dem jeder Satz aus Tafeln bestimmter Dicken und Materialien, und Nieten von bestimmtem Durchmesser besteht.

4. Ein Verfahren zur Bildung eines Überlappungsstoßes zwischen zwei Tafeln mit einem Durchschlag-Bördelniet von tassenförmiger Konfiguration, der ein geschlossenes Kopfende und ein geöffnetes Ende aufweist; wobei das Verfahren umfaßt:
Herstellung einer Mehrzahl von identischen Prüfverbindungen von zwei Prüftafeln, die für diese Tafeln in diesem Überlappungsstoß repräsentativ sind;
Durchschlagen jeder dieser Prüfverbindungen mit identischen Durchschlag-Bördelnieten, wobei jeder Niet bezüglich dieser äußeren Oberfläche der entsprechenden Prüftafel in eine unterschiedliche Steuertiefe getrieben wird;
Messen der zum Trennen jeder der Prüfverbindungen benötigten Scherlast;
Beobachten und Aufzeichnen von Korrelationsdaten, welche die Beziehung zwischen diesen Steuertiefen und diesen Scherlasten repräsentieren;
Wählen eines gewünschten Bereiches von Scherlasten;
Bilden des Überlappungstoßes;
Anordnen dieser zwei Tafel in übereinanderliegender, sich zuweisender Beziehung;
Positionieren eines Bördel-Umformgesenks unter der unteren dieser Tafeln;
Positionieren dieses Niets in Deckung mit diesem Gesenk auf der oberen dieser Tafeln, wobei dieses Nietkopf-Ende nach oben zeigt; und
Hineintreiben dieses Niets in diese Tafeln bis zu einer Tiefe, wobei die Tiefe dieses Nietkopfes bezüglich der äußeren Oberfläche der oberen dieser Tafeln - aus diesen Korrelationsdaten - eine Naht-Scherfestigkeit innerhalb der gewünschten Naht-Scherfestigkeits-Bereiche anzeigt.

5. Ein Verfahren nach Anspruch 4, in dem dieser Herstellungsschritt für eine Mehrzahl von Sätzen identischer Prüfverbindungen ausgeführt wird; und in dem jeder Satz aus Tafeln bestimmter Dicken und Materialien, und Nieten von bestimmtem Durchmesser besteht.

6. Ein Verfahren nach Anspruch 4 oder 5, in dem das Material einer dieser Tafeln Aluminium ist.

7. Ein Verfahren nach Anspruch 6, in dem diese eine Tafel die obere dieser Tafeln ist.

8. Ein Verfahren nach Anspruch 6, in dem diese eine Tafel die untere dieser Tafeln ist.

## Revendications

1. Procédé de surveillance et de commande de la résistance au cisaillement d'un joint à recouvrement (18) formé de deux panneaux (14, 16) fixés ensemble en relation de vis-à-vis de recouvrement par un rivet perforant à évasement (36) enfoncé en relation de perçage avec les panneaux (14, 16) à partir de la surface extérieure de l'un des panneaux et comportant une tête semblable à un disque (38) sur l'extrémité de celui-ci adjacente à ladite surface extérieure du panneau, le procédé comprenant les étapes consistant à :
préparer une pluralité de joints de test identiques de deux panneaux de test représentatifs desdits panneaux dans ledit joint à recouvrement,
percer chacun desdits joints de test avec un rivet perforant à évasement identique (36), chaque rivet étant enfoncé jusqu'à une profondeur de commande différente par rapport à ladite surface extérieure du panneau d'essai correspondante,
mesurer la charge de cisaillement nécessaire pour séparer chaque dit joint de test,
observer et enregistrer des données de corrélation représentant la relation entre lesdites profondeurs de commande et lesdites charges de cisaillement,
choisir une plage désirée de charges de cisaillement, former le joint à recouvrement (18),
mesurer la profondeur entre ladite tête de rivet (38) et ladite surface extérieure du panneau, et
déterminer la charge de cisaillement indiquée dudit joint à recouvrement (18) à partir desdites données de corrélation.

2. Procédé selon la revendication 1, dans lequel Ladite charge de cisaillement indiquée se situe à l'extérieur de ladite plage de charges de cisaillement désirée et comprenant en outre l'étape consistant à modifier ladite étape de formage afin de changer ladite profondeur entre ladite tête de rivet et ladite surface extérieure du panneau.

3. Procédé selon la revendication 1 ou 2, dans lequel ladite étape de préparation est réalisée pour une pluralité d'ensembles de joints de test identiques, dans lequel chaque ensemble est constitué de panneaux de certaines épaisseurs et de certains matériaux et de rivets d'un certain diamètre.

4. Procédé de formation d'un joint à recouvrement entre deux panneaux avec un rivet perforant à évasement de configuration semblable à une coupelle comportant une extrémité de tête fermée et une extrémité ouverte, le procédé comprenant :
la préparation d'une pluralité de joints de test identiques de deux panneaux de test représentatifs desdits panneaux dans ledit joint à recouvrement,
le perçage de chacun desdits joints de test avec des rivets perforants à évasement identiques, chaque rivet étant enfoncé jusqu'à une profondeur de commande différente par rapport à ladite surface extérieure du panneau de test correspondante,
la mesure de la charge de cisaillement nécessaire pour séparer chaque joint de test,
l'observation et l'enregistrement de données de corrélation représentant la relation entre lesdites profondeurs de commande et lesdites charges de cisaillement,
le choix d'une plage désirée de charges de cisaillement,
la formation du joint à recouvrement,
le placement desdits deux panneaux en relation de vis-à-vis à recouvrement,
le positionnement d'une matrice formant un évasement au-dessous du plus bas desdits panneaux,
le positionnement dudit rivet en alignement avec ladite matrice se trouvant sur le plus haut desdits panneaux, ladite extrémité de tête de rivet regardant vers le haut, et
l'enfoncement dudit rivet dans lesdits panneaux jusqu'à une certaine profondeur, dans lequel la profondeur de ladite tête de rivet par rapport à la surface extérieure du plus haut desdits panneaux indique à partir desdites données de corrélation une résistance au cisaillement du recouvrement à l'intérieur des plages de ladite résistance au cisaillement du recouvrement désirées.

5. Procédé selon la revendication 4, dans lequel ladite étape de préparation est réalisée pour une pluralité d'ensembles de joints de test identiques, dans lequel chaque ensemble est constitué de panneaux de certaines épaisseurs et de certains matériaux et de rivets d'un certain diamètre.

6. Procédé selon la revendication 4 ou 5, dans lequel le matériau de l'un desdits panneaux est l'aluminium.

7. Procédé selon la revendication 6, dans lequel ledit un panneau est le plus haut desdits panneaux.

8. Procédé selon la revendication 6, dans lequel ledit un panneau est le plus bas desdits panneaux.
